Europäisches Patentamt

European Patent Office

Office européen des brevets

(11) Veröffentlichungsnummer: **0 258 670 B1**

# (12) EUROPÄISCHE PATENTSCHRIFT

(45) Veröffentlichungstag der Patentschrift: **04.11.92**

(21) Anmeldenummer: **87111358.5**

(22) Anmeldetag: **05.08.87**

(51) Int. Cl.⁵: **H01G 4/30**, H01G 1/01

(54) **Füllschichtbauteil.**

(30) Priorität: **18.08.86 DE 3627929**

(43) Veröffentlichungstag der Anmeldung:
**09.03.88 Patentblatt 88/10**

(45) Bekanntmachung des Hinweises auf die
Patenterteilung:
**04.11.92 Patentblatt 92/45**

(84) Benannte Vertragsstaaten:
**AT BE CH DE ES FR GB IT LI**

(56) Entgegenhaltungen:
**FR-A- 2 193 795**

(73) Patentinhaber: **SIEMENS AKTIENGESELL-
SCHAFT
Wittelsbacherplatz 2
W-8000 München 2(DE)**

(72) Erfinder: **Otto, Klaus, Dipl.-Chem.
Klingenfeldstrasse 54
W-8500 Nürnberg 60(DE)**
Erfinder: **Kippenberg, Horst, Dr.
Sudetenring 24
W-8522 Herzogenaurach(DE)**
Erfinder: **Moser, Thomas, Dipl.-Ing.
Schlesienstrasse 35
W-8563 Schnaittach(DE)**
Erfinder: **Röss, Erich, Dr.
Ziehrer Strasse 56
W-8025 Unterhaching(DE)**

## Beschreibung

Die Erfindung bezieht sich auf ein Füllschichtbauteil aus monolithischer Keramik insbesondere für einen kondensator mit einem keramischen Schichtaufbau aus dichten und porösen Schichten, der mit einem metallischen Werkstoff getränkt ist und der an gegenüberliegenden Seitenflächen kontaktierungen aufweist.

Zum Drucktränken von porösen Keramikteilen mit Metall werden beispielsweise Blei oder Bleilegierungen verwendet. Diese Werkstoffe haben bekannterweise keine benetzende Wirkung auf Keramikoberflächen. Daher kann nach dem Drucktränken das flüssige Metall beim Herausziehen der Keramikteile aus dem Tränkbad wieder aus den Bauteilen herauslaufen. Um letzteres zu verhindern, werden üblicherweise die Außenflächen des Keramikteiles mit feinporösen Überzügen, z.B. durch Aufsintern von Glasfritten, die nach dem Drucktränken mechanisch entfernt werden müssen oder durch Aufbrennen von Silberpasten, beschichtet.

Aus der DE-AS 23 23 921 ist ein Füllschichtbauteil der obengenannten Art und ein Verfahren zu dessen Herstellung bekannt, bei dem der Schichtaufbau aus abwechselnd dichten und porösen Schichten, insbesondere mit den Metallen Blei (Pb), Aluminium (Al), Kupfer (Cu), Zink (Zn), Zinn (Sn) und Cadmium (Cd) oder Legierungen eines oder mehrerer dieser Metalle getränkt wird. Dabei wird davon ausgegangen, daß speziell solche Metalle gewählt werden müssen, die die keramischen Körper, in die sie injiziert werden, nicht leicht benetzen. Im einzelnen sollen dadurch unerwünschte Oberflächenablagerungen der Metalle oder der Legierungen verhindert oder gering gehalten werden, da sie ansonsten separat entfernt werden müßten, um Kurzschlüsse auszuschließen. Im einzelnen werden in der DE-AS 23 23 921 die Wismut-Legierung Bi63Pb25Sn10In2, bzw. die Zink-Legierung ZnAl4Cu1 oder die Silberlegierung AgCu28 sowie verschiedene Messinge und Bronzen angegeben, die angeblich die geforderten Randbedingungen erfüllen sollen.

Aufgabe der Erfindung ist es demgegenüber, Füllschichtbauteile mit zugehörigen Tränkwerkstoffen anzugeben, bei denen keine zusätzlichen Maßnahmen zum Verhindern des Auslaufens der Schmelze aus dem Keramikteil beim Herausziehen aus dem Tränkbad getroffen werden müssen.

Die Aufgabe ist erfindungsgemäß dadurch gelöst, daß der Tränkwerkstoff ein die Keramik im flüssigen Zustand benetzendes Metall oder eine die keramik benetzende Legierung ist. Vorzugsweise kann der Tränkwerkstoff eine Blei-Indium-Legierung sein. Eventuell an den Außenflächen der Keramikteile anhaftende Reste des Tränkwerkstoffes können durch eine chemische Behandlung mit einer Ätzlösung auf einfache Art entfernt werden.

Grundlage der Erfindung waren Untersuchungen zum Benetzungsverhalten von Tränklegierungen auf Keramik. Im Gegensatz zum Stand der Technik wurde gefunden, daß speziell durch Zusätze von Indium (In), die über einem Mindestwert liegen, zu den möglichen Tränklegierungen eine Benetzung der Keramik durch die Metallschmelzen erreicht wird.

Bei solchen Legierungen können damit die das Auslaufen der flüssigen Metallschmelze bisher notwendigen Maßnahmen entfallen.

Weitere Einzelheiten und Vorteile der Erfindung ergeben sich aus der nachfolgenden Figurenbeschreibung von Ausführungsbeispielen anhand der Zeichnung.

Es zeigen

FIG 1 ein Füllschichtbauteil, das mit einem nichtbenetzenden Werkstoff getränkt ist,

FIG 2 ein Füllschichtbauteil gemäß der Erfindung und

FIG 3 eine graphische Darstellung zur Abhängigkeit der Verwendbarkeit von Indium als Zusatz zu Tränkmetallen.

In den Figuren sind identische Teile mit gleichen Bezugszeichen versehen. Die Figuren werden nachfolgend teilweise zusammen beschrieben.

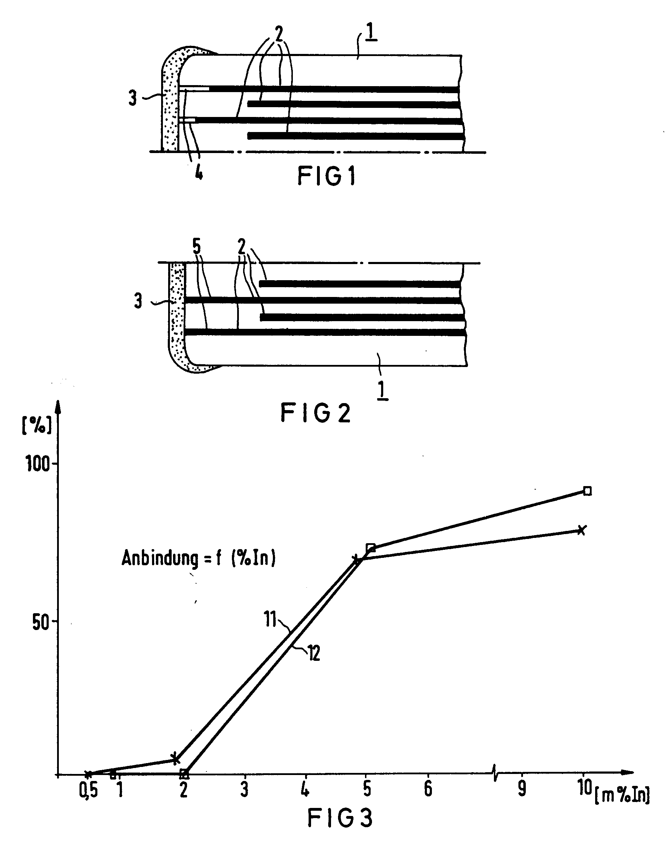

In FIG 1 und FIG 2 ist ein Ausschnitt aus einem Bauteil 1 dargestellt, das einen Schichtaufbau aus abwechselnd dichten und porösen Schichten aufweist.

Werden die porösen Schichten 2 mit metallischen Werkstoffen gefüllt und die Seitenflächen des Bauteiles 1 mit metallischen Schichten als Kontaktierungen 3 versehen, so lassen sich aufgrund der dielektrischen Eigenschaften der Keramik Kondensatoren realisieren. Dazu müssen die porösen Schichten 2 in geeigneter Weise mit einem Tränkmetall gefüllt werden. Letzteres erfolgt in bekannter Weise durch Druck oder Schleudertränken, wofür beispielsweise Blei-Basiswerkstoffe verwendet werden.

In FIG 1 ist ein mit Blei getränktes Bauteil 1 gezeigt, auf das anschließend die Kontaktierungen aufgebracht wurden. Aufgrund der Nichtbenetzbarkeit der Keramik durch Blei läuft nach dem Drucktränken beim Herausnehmen des Bauteiles 1 aus dem flüssigen Tränkbad das Blei zumindest teilweise wieder aus der Keramik aus. Es ergeben sich so in den Schichten 2 zu den Randbereichen nur unvollständig ausgefüllte Schichtbereiche 4. Dadurch wird die anschließende elektrische Anbindung an die Kontaktierungen 3 unmöglich gemacht.

Um ein Auslaufen des flüssigen Tränkwerkstoffes zu verhindern, wurden bisher in der Praxis die Außenflächen des keramischen Bauteiles 1 mit feinporösen Überzügen, z.B. durch Aufsintern von Glasfritten, die nach dem Drucktränken mechanisch entfernt werden mußten, beschichtet. Bekannt ist auch das Aufbrennen von Silberpasten als Kontaktierungen als Vorabschritt, durch die ein Drucktränken möglich ist. In jedem Fall war aber ein zusätzlicher Aufwand notwendig.

In FIG 2 ist das gleiche keramische Bauteil 1 wie Fig. 1, gefüllt mit einer die Keramik im flüssigen Zustand benetzenden Legierung, gezeigt. Man erkennt, daß die Bereiche 2 voll ausgefüllt sind und die anschließend aufgebrachten Kontaktierungen 3 elektrisch mit diesen Schichten verbunden sind.

Ein geeigneter Zusatz zu beispielsweise Blei als Hauptbestandteil des Tränkwerkstoffes, der eine Benetzbarkeit gewährleistet, ist insbesondere Indium. Im Gegensatz zum Stand der Technik, beispielsweise der DE-AS 23 23 921, wurde erkannt, daß die Zugabe von Indium zu Blei die Benetzung von Keramik signifikant verbessert, was aus FIG 3 ablesbar ist.

In FIG 3 ist die elektrische Anbindung als Funktion des Indiumgehaltes bei einer Bleilegierung dargestellt:
Auf der Abszisse ist der Massengehalt einer Blei-Indium-Legierung in Prozent, auf der Ordinate die Verwendbarkeit der gefertigten Bauteile angegeben. Es sind die Ergebnisse zweier Versuchsreihen 11 und 12 dargestellt.

Die elektrische Anbindung der Metallfüllung 5 und Kontaktierungen 3 ist als Ergebnis des Fertigungsprozesses letztendlich ein Maß für die Verwendbarkeit des Tränkwerkstoffes. Es ist ersichtlich, daß unterhalb von 0,5 m-% Indium in jedem Fall der Werkstoff ungeeignet ist. Weiter ist ersichtlich, daß bereits bei Gehalten größer als 0,5 m-% Indium eine geringe Verbesserung erzielt wird, die Werte aber erst ab 2 m-% Indium deutlich ansteigen. Insgesamt ergibt sich daraus, daß der Indiumgehalt bei einer als Tränkwerkstoff verwendeten Bleiindiumlegierung vorteilhafterweise über 2 m-% und insbesondere zwischen 2,5 und 20 m-% liegen sollte.

Es hat sich gezeigt, daß bei einem die Keramik benetzendem Tränkwerkstoff auf Bleibasis das Indium zumindest teilweise durch Gallium (Ga) ersetzt werden kann. Dabei kann das Gallium bis zu einem Gehalt von etwa 20 m-% gehen.

Dem Tränkwerkstoff können gegebenenfalls weitere Zusätze zur Einstellung eines geeigneten Schmelzpunktes, insbesondere auf einen Wert über 180 ° C, bzw. zur Einstellung des Erstarrungsverhaltens beigegeben werden. Bei solchen Zusätzen muß aber darauf geachtet werden, daß sich die Benetzungseigenschaften nicht gleichzeitig wieder verschlechtern. Als weitere Zusätze sind beispielsweise Zinn bis zu einem Gehalt von etwa 10 m-%, Antimon bis etwa 45 m-% oder auch Wismut bis etwa 35 m-% möglich. Letzterer Wert liegt in jedem Fall deutlich unter den bekannten Werten, bei denen insbesondere bei einer Wismut-Blei-Legierung speziell ein nichtbenetzendes Verhalten angestrebt wurde.

Die beschriebenen Legierungen auf Bleibasis sind als Tränkwerkstoffe gut geeignet für die Herstellung von Kondensatoren. Es hat sich jedoch gezeigt, daß für bestimmte andere Anwendungen der Füllschichtbauteile Blei-Indium-Legierungen aufgrund der spezifischen Leitfähigkeit, des Schmelzpunktes und einer gewissen Alterungsanfälligkeit noch nicht optimal sind. Für derartige Zwecke können auch Kupfer-Indium- oder Silber-Indium-Legierungen verwendet werden, die ebenfalls im flüssigen Zustand Keramik benetzende Eigenschaften aufweisen.

**Patentansprüche**

1. Füllschichtbauteil aus monolithischer Keramik insbesondere für einen kondensator mit einem keramischen Schichtaufbau aus dichten und porösen Schichten, der mit einem metallischen Werkstoff getränkt ist und der an gegenüberliegenden Seitenflächen Kontaktierungen aufweist, **dadurch gekennzeichnet,** daß der Tränkwerkstoff im flüssigen Zustand ein die Keramik benetzendes Metall oder eine die keramik benetzende Legierung ist.

2. Füllschichtbauteil nach Anspruch 1, **dadurch gekennzeichnet,** daß der Tränkwerkstoff eine Blei-Indium-Legierung mit einem Indiumanteil > 0,5 m-% ist.

3. Füllschichtbauteil nach Anspruch 1, **dadurch gekennzeichnet,** daß der Tränkwerkstoff eine Kupfer-Indium-Legierung mit einem Indiumanteil > 0,5 m-% ist.

4. Füllschichtbauteil nach Anspruch 1, **dadurch gekennzeichnet,** daß der Tränkwerkstoff eine Silber-Indium-Legierung mit einem Indiumanteil > 0,5 m-% ist.

5. Füllschichtbauteil nach einem der Ansprüche 2 bis 4, **dadurch gekennzeichnet,** daß der Indiumanteil > 2 m-% ist.

6. Füllschichichtbauteil nach Anspruch 5, **dadurch gekennzeichnet,** daß der Indiumanteil zwischen 2,5 und 20 m-% liegt.

7. Füllschichtbauteil nach einem der vorhergehenden Ansprüche, **dadurch gekennzeichnet,** daß im Tränkwerkstoff Indium zumindest teilweise durch Gallium ersetzt ist.

**8.** Füllschichtbauteil nach einem der vorhergehenden Ansprüche, **dadurch gekennzeichnet,** daß der Tränkwerkstoff Zusätze zur Einstellung des Schmelzpunktes, insbesondere auf einen Wert über 180°C, bzw. zur Einstellung des Erstarrungsverhaltens, aufweist.

**9.** Füllschichtbauteil nach Anspruch 8, **dadurch gekennzeichnet,** daß der Tränkwerkstoff zusätzlich Zinn (Sn) aufweist.

**10.** Füllschichtbauteil nach Anspruch 8, **dadurch gekennzeichnet,** daß der Tränkwerkstoff zusätzlich Antimon (Sb) aufweist.

**11.** Füllschichtbauteil nach Anspruch 8, **dadurch gekennzeichnet,** daß der Tränkwerkstoff zusätzlich Wismut (Bi) aufweist.

## Claims

**1.** Filled layer component made from monolithic ceramic, in particular for a capacitor, having a ceramic layer structure of dense and porous layers, which is impregnated with a metallic material and which has contacts on opposite lateral surfaces, characterised in that the impregnating material in the liquid state is a metal which wets the ceramic, or an alloy which wets the ceramic.

**2.** Filled layer component according to claim 1, characterised in that the impregnating material is a lead-indium-alloy with an indium content of >0.5 m-%.

**3.** Filled layer component according to claim 1, characterised in that the impregnating material is a copper-indium-alloy with an indium content of >0.5 m-%.

**4.** Filled layer component according to claim 1, characterised in that the impregnating material is a silver-indium-alloy with an indium content of >0.5 m-%.

**5.** Filled layer according to one of claims 2 to 4, characterised in that the indium content is >2 m-%.

**6.** Filled layer according to claim 5, characterised in that the indium content is between 2.5 and 20 m-%.

**7.** Filled layer according to one of the preceding claims, characterised in that the indium in the impregnating material is replaced at least partially by gallium.

**8.** Filled layer component according to one of the preceding claims, characterised in that the impregnating material has additives for adjusting the melting point, in particular to a value above 180°C, or for adjusting the solidification behaviour.

**9.** Filled layer component according to claim 8, characterised in that the impregnating material additionally contains tin (Sn).

**10.** Filled layer component according to claim 8, characterised in that the impregnating material additionally contains antimony (Sb).

**11.** Filled layer component according to claim 8, characterised in that the impregnating material additionally contains bismuth (Bi).

## Revendications

**1.** Composant à couche imprégnée en céramique monolithique, notamment pour un condensateur, comprenant une structure stratifiée en céramique, constituée de couches étanches et poreuses, qui est imprégnée d'un matériau métallique et qui comporte des contacts plats sur des faces latérales opposées, caractérisé en ce que le matériau d'imprégnation à l'état liquide est un métal mouillant la céramique ou est un alliage mouillant la céramique.

**2.** Composant à couche imprégnée suivant la revendication 1, caractérisé en ce que le matériau d'imprégnation est un alliage de plomb et d'indium ayant une proportion atomique d'indium supérieure à 0,5 %.

**3.** Composant à couche imprégnée suivant la revendication 1, caractérisé en ce que le matériau d'imprégnation est un alliage de cuivre et d'indium ayant une proportion atomique d'indium supérieure à 0,5 %.

**4.** Composant à couche imprégnée suivant la revendication 1, caractérisé en ce que le matériau d'imprégnation est un alliage d'argent et d'indium ayant une proportion atomique d'indium supérieure à 0,5 %.

**5.** Composant à couche imprégnée suivant l'une des revendications 2 à 4, caractérisé en ce que la proportion atomique d'indium est supérieure à 2 %.

**6.** Composant à couche imprégnée suivant la revendication 5, caractérise en ce que la proportion atomique d'indium est comprise entre 2,5 et 20 %.

7.  Composant à couche imprégnée suivant l'une des revendications précédentes, caractérisé en ce que, dans le matériau d'imprégnation, l'indium est remplacé au moins partiellement par du gallium.

8.  Composant à couche imprégnée suivant l'une des revendications précédentes, caractérisé en ce que le matériau d'imprégnation comporte des additifs pour régler le point de fusion, notamment à une valeur supérieure à 180°C, ou pour régler le comportement à la solidification.

9.  Composant à couche imprégnée suivant la revendication 8, caractérisé en ce que le matériau d'imprégnation comporte, en outre, de l'étain (Sn).

10. Composant à couche imprégnée suivant la revendication 8, caractérisé en ce que le matériau d'imprégnation comporte, en outre, de l'antimoine (Sb).

11. Composant à couche imprégnée suivant la revendication 8, caractérisé en ce que le matériau d'imprégnation comporte, en outre, du bismuth (Bi).

FIG 1

FIG 2

Anbindung = f (%In)

FIG 3